# EUROPÄISCHE PATENTSCHRIFT

(11) **EP 1 204 466 B1**
(45) Veröffentlichungstag und Bekanntmachung des Hinweises auf die Patenterteilung: **17.05.2006**
(21) Anmeldenummer: 00960339.0
(22) Anmeldetag: 02.08.2000
(51) Int. Cl.: B01J 8/18, C10J 3/56, C10J 3/66

(54) **VERFAHREN UND VORRICHTUNG ZUM TROCKNEN, TRENNEN, KLASSIEREN UND ZERSETZEN VON ABPRODUKTEN**
METHOD AND DEVICE FOR DRYING, SEPARATING, CLASSIFYING AND DECOMPOSING RECOVERABLE WASTE PRODUCTS
PROCEDE ET DISPOSITIF DE SECHAGE, DE SEPARATION, DE CLASSEMENT ET DECOMPOSITION DE DECHETS DE RECUPERATION

(30) Priorität: 03.08.1999 DE 19937521
(43) Veröffentlichungstag der Anmeldung: 15.05.2002
(73) Patentinhaber: Martin, Harald, 06567 Bad Frankenhausen (DE); Streitenberger, Hartwig, 07751 Golmsdorf (DE)
(72) Erfinder: Martin, Harald, 06567 Bad Frankenhausen (DE); Streitenberger, Hartwig, 07751 Golmsdorf (DE)
(74) Vertreter: Rauschenbach, Marion
(86) Internationale Anmeldenummer: PCT/DE2000/002658
(87) Internationale Veröffentlichungsnummer: WO 2001/008823

(56) Entgegenhaltungen:
- DE-A- 2 816 282

## Beschreibung

### Technisches Gebiet

Die Erfindung bezieht sich auf die Gebiete des Maschinenbaus, der Abfallwirtschaft und der Papierindustrie und betrifft ein Verfahren und eine Vorrichtung zum Trocknen, Trennen, Klassieren und Zersetzen von Abprodukten aus einem Ent-und/oder Vergasungsprozeß von Abfallstoffen insbesondere von bereits teilweise zersetzten Abprodukten, die nach einem Ent- oder Vergasungsprozeß (Pyrolyse) anfallen.

### Stand der Technik

Bei der Verarbeitung von Altpapier im Recyclingprozeß verbleiben nach dem Aufschlämmen der mechanisch arbeitenden Entschlämmung Reststoffe. Diese Reststoffe können in unterschiedlicher Menge, Konzentration und Art verklumptes Papier, Pappreste, Plaststücke, Holzrückstände, Metallteile und anderes mehr enthalten. Die Gesamtheit dieser Reststoffe werden als Spuckstoffe bezeichnet.
Diese Spuckstoffe werden nach dem Austritt aus dem Schlämmprozeß und gegebenenfalls nach einer Zwischenlagerung, bei der eine gravimetrische Entwässerung stattfinden kann, im allgemeinen auf einer Sondermülldeponie gelagert.
Diese Spuckstoffe enthalten zu diesem Zeitpunkt durchschnittlich 50 % Wasser, welches als Oberflächenwasser und auch als aufgesaugtes Wasser im Papier- und Holzanteil vorkommen kann.

Es sind bereits verschiedene Verfahren und Vorrichtungen bekannt oder beschrieben worden, die die Aufbereitung und/oder Verbrennung und/oder Vergasung von Abfällen, Reststoffen und auch Spuckstoffen beinhalten.

Nach der EP 0 609 802 A1 ist ein Verfahren und eine Vorrichtung zur kontinuierlichen Entgasung und/oder Vergasung eines festen Brennstoffes oder Abfallstoffes bekannt.
Die Vorrichtung besteht aus einem schachtartigen Reaktor, in dem die Beschickung, das gasförmige Vergasungsmittel und der erzeugte gasförmige Brennstoff im Gleichstrom absteigend geführt werden. Das Vergasungsmittel wird in einem in der Mantelpartie befindlichen schraubenförmigen Gegenstrom-Wärmetauscher vom gasförmigen Brennstoff vorgewärmt. Dieses vorgewärmte Vergasungsmittel wird in schraubenlinienförmigen oder wellenförmigen Kanälen im keramischen Herdkörper des Reaktors und in einem als Herdabschluß dienenden beweglichen oder festen, in die untere Partie der Beschickung hineinragenden kegel- oder paraboloidförmigen Zentralkörper weiter aufgeheizt. Der Rost wird durch ein einen Vollkegel oder einen hohlkegelförmigen Ringkörper darstellendes, drehbares, vertikal verschiebbares Gegenstück gebildet, das gegenüber der unteren Herdpartie einen einstellbaren ringförmigen Durchlass zum Abzug des erzeugten gasförmigen Brennstoffs und zum Austrag der festen oder flüssigen Reaktionsprodukte in Form von Asche, Schlacke, Destillationsrückstände offen läßt.

Weiterhin ist aus DE 28 16 282 ein Abfallverbrennungsofen und ein Verfahren zum Verbrennen von Abfällen bekannt. Des Abfallverbrennungsofen beinhaltet ein Wirbelbett, das Wärmeübertragungsteilchen enthält, und in das die Abfälle eingeleitet werden. Durch die Bodenplatte werden über eine mittlere Öffnung und durch in Umfangsrichtung angeordnete Öffnungen luft als Oxidationsgas eingeleitet. Die Abfälle werden im Wirbelbett verbrannt.

Nachteilig bei diesem Verfahren und Vorrichtung ist, daß die Entgasung und/oder Vergasung der festen Brennstoffe oder Abfallstoffe nicht vollständig erfolgt.

### Darstellung der Erfindung

Die Aufgabe der Erfindung besteht darin, ein Verfahren und eine Vorrichtung anzugeben, die nach der Entgasung und/oder Vergasung von Abfallstoffen die verbleibenden Restprodukte weiter und möglichst vollständig umsetzt und verwertet. Die Aufgabe wird durch die in den unabhängigen Ansprüchen angegebene Erfindung gelöst. Weiterbildungen sind Gegenstand der Unteransprüche.

Durch die erfindungsgemäße Vorrichtung und das erfindungsgemäße Verfahren wird es möglich, Abprodukte und insbesondere die noch nicht vollständig zersetzten Abfallstoffe aus Ent- oder Vergasungsprozessen weiter und möglichst vollständig umzusetzen, so dass eine Weitergabe an die Umwelt und/oder Deponieen im wesentlichen ohne besondere Maßnahmen und möglichst schadstoffrei erfolgen kann.

Die erfindungsgemäße Vorrichtung funktioniert folgendermaßen.
Die festen Abprodukte aus beispielsweise einem Pyrolyseprozeß, bei dem Abfallstoffe bereits teilweise oder größtenteils umgesetzt worden sind, werden mit dem Abgas gemeinsam in eine schachtartige Kammer eingebracht. Sie lagern sich zuerst in dem trichterförmigen unteren Teil der Kammer ab. Der trichterförmige Teil kann dabei vorteilhafterweise kegelstumpfförmig oder schachtförmig ausgeführt und linienförmig, zentral und/oder dezentral angeordnet sein. Nach der Einlagerung der ersten festen Abprodukte und dann während der weiteren Beschickung der Kammer mit den festen Abprodukten wird von unten durch den doppelwandigen Teil der Abzugsöffnung, die mittig im trichterförmigen Teil der Kammer angeordnet ist, Luft, vorteilhafterweise vorgewärmte Luft, eingeblasen. Dies erfolgt vorteilhafterweise mit einem Druck von 6 - 8 kPa.
Dabei ist der trichterförmige Teil der Kammer vorteilhafterweise kegelstumpfförmig und im oberen Teil ganz oder teilweise doppelwandig ausgeführt, wodurch ein definierter Spalt zwischen den beiden Wandungen realisiert werden kann.

Gleichzeitig wird durch den ebenfalls doppelwandig ausgeführten Zuführungsschacht parallel zum trichterförmigen Teil der Kammer das Feststoff-Gasgemisch, vorteilhafterweise aus dem Pyrolyseprozeß, tangential in die Kammer eingebracht. Öffnungen führen das Feststoff-Gasgemisch zwangsweise in den Bereich des eingelagerten Feststoffes und in diesen hinein, wo es auf die eingebrachte Luft trifft. Das Pyrolysegas wird ebenfalls mit einem Druck von 6 - 8 kPa eingebracht.

Die Öffnungen, durch die die Luft und das Feststoff-Gasgemisch in die Kammer gelangen, werden vorteilhafterweise durch zwei ineinander gelagerte kegelstumpfförmige Einbauten im kegelstumpfförmigen Teil der Kammer gebildet. Durch diese Einbauten bilden sich zwischen der Kammerwand und dem ersten Einbauteil und zwischen den beiden kegelstumpfförmigen Einbauteilen jeweils ein Ringspalt. Diese Ringspalte sind ebenfalls wieder vorteilhafterweise veränderbar, indem die Einbauten gegeneinander und gegen die Kammerwand verschiebbar angeordnet sind. Durch die Veränderung der Ringspaltgröße kann die Strömungsgeschwindigkeit der eingebrachten Luft- und Feststoff-Gasgemischmenge geregelt werden.

Beim Hindurchtritt durch das Feststoffbett wird das Pyrolysegas von den festen Bestandteilen, wie Koks und Asche, befreit.
Die eingebrachte Luft kann beim Hindurchtritt durch das Feststoffbett bereits mit den Feststoffen reagieren. Dabei wird der vorhandene Kohlenstoff und die Kohlenwasserstoffe zu CO, CO₂, H₂O und H₂ umgesetzt. Die dabei freiwerdende Reaktionswärme führt zum Temperaturanstieg im Feststoffbett und des Gasgemisches auf ca. 1200 °C. Diese Temperatur reicht aus, um die höheren gasförmigen Kohlenwasserstoffe im Gasgemisch zu cracken.

Zum Anfahren des gesamten Prozesses und zur Sicherung der Reaktionstemperatur ist im oberen, vorteilhafterweise zylindrischen, Teil der Kammer ein Brenner installiert.

Das im oberen Bereich der Kammer austretende Gas ist weitgehend von Kohlenstoff und höheren Kohlenwasserstoffen befreit und weist Stickstoff und einen hohen Anteil an CO und H₂ auf. Die noch im Gas befindlichen Feststoffpartikel können in einem nachgeschalteten Zylkon abgetrennt werden.

Durch die Austrittsöffnung kann der weitgehend umgesetzte kohlenstoff- und kohlenwasserstoffreie Feststoff ausgetragen werden.
Auch die nicht umgesetzten Reststoffe, wie Asche- und Kohlenstoffreste, werden im zentral angeordneten Auffangtrichter gesammelt und über den nachfolgenden Schacht mit Ascheabzug ausgetragen.

Durch das Luft-Pyrolysegas-Gemisch, welches nach oben geblasen wird, entsteht in der Kammer ein rotationssymmetrischer Wirbel, der in axialer Richtung die Form einer Fontaine hat, durch den der locker eingelagerte Feststoff aufgenommen und von der Kammerwand in den axialen Bereich der Kammer getragen wird. Dort fallen die ganz oder teilweise umgesetzten Feststoffe entsprechend ihrer Dichte an unterschiedlichen Stellen auf dem Kammerboden nieder und können dadurch vorteilhafterweise klassiert abgezogen werden. Feststoffe, die durch die einströmende Luft nicht angehoben werden können, werden ebenfalls durch die Austrittsöffnung abgezogen.
Die sich ausbildende Strömung ist stabil und kann durch den Einbau eines Führungsrohres zur Vergleichmäßigung des Feststoffumlaufes bei schwankender Füllhöhe noch weiter stabilisiert werden. Auch Variationen des Luftdurchsatzes können die Strömung in weiten Bereichen nicht verändem.

### Bester Weg zur Ausführung der Erfindung

Im weiteren wird die Erfindung an einem Ausführungsbeispiel näher erläutert.

Die schachtartige Kammer ist ein zylindrischer Behälter mit einem Durchmesser von 2000 mm und einer Mantellänge von 4000 mm, oben abgeschlossen mit einem Klöpperboden und im unteren Bereich kegelstumpfförmig mit einer Neigung von 45 ° ausgebildet. Im oberen Bereich des Mantels befindet sich ein tangential angeschnittenes Gasabzugsrohr mit einem Durchmesser von 500 mm. Die Kammer ist auf einem Gestell im Bereich des Überganges zwischen zylindrischen und kegelstumpfförmigem Teil des Behälters verlagert. Der aus Kohlenstoffstahl bestehende Mantel des Behälters ist gegenüber den Reaktionsgasen mit einer Ausmauerung von 200 mm Dicke geschützt. Der kegelstumpfförmige Boden hat axial angeordnet einen Aufnahmeflansch mit 1000 mm Durchmesser für die Luftzuführung. Der kegelstumpfförmige Bodenteil hat weiterhin einen über 180 ° angeschnittenen seitlichen Ringspalt, über den das Abgas und die Feststoffe gemeinsam mit einer Strömungsgeschwindigkeit von 20 m/s tangential eingebracht werden und sich über den Umfang der Kammer gleichmäßig verteilen. Zum Zentrum hin sind zwei kegelstumpfförmig ausgebildete Leitschaufeln trichterförmig ineinander angeordnet. Die größere und tiefersitzende mit 700 mm Durchmesser und die andere mit 500 mm Durchmesser. Die von unten nach oben axial eintretende Luft durchdringt das Feststoffbett und trifft auf die Abgase. Das Gasgemisch reißt die Feststoffteilchen nach außen oben aufsteigend an der Behälterwand mit sich und reagiert dabei mit dem Gasgemisch. Im oberen Drittel des Behälters fällt die Strömung nach innen und beruhigt sich, so dass die noch nicht thermisch zersetzten Kohlenstoffteile und die Aschanteile wieder nach unten fallen. Dort treffen sie auf einen im Zentrum angeordneten Auffangtrichter, der sich bis zum unteren Bereich durchzieht und von einem Schneckenförderer entsorgt wird. Das heiße Gasgemisch bewirkt eine Reaktion mit dem 700 °C heißen Kohlenstoffteilchen, wodurch Energie freigesetzt wird, die das Gasgemisch und die Reaktorwand auf 1200 °C aufheizen. Aufgrund des großen Querschnittes des Behälters und der damit verbundenen Strömungsberuhigung ergibt sich eine ausreichende Reaktionszeit zur Auflösung des Kohlenstoffes in CO und CO₂. Dabei wird die Restfeuchte des Prozeßgases mit Kohlenstoff zu CO und H₂ umgesetzt. Die beschriebenen zwei kegelstumpfförmigen Einbauten, zwischen denen die Luft und die Abgase austreten, sind über Befestigungen verstellbar angeordnet, so dass die Strömungsgeschwindigkeiten optimiert werden können. Die zwei Einbauten sind aus Keramik.

Zur Sicherstellung des Beginns einer chemischen Reaktion, insbesondere im Anfahrprozeß und später als Sicherheitszündquelle, ist im unteren zylindrischen Teil des Behälters axial ein Zündbrenner in Form eines Plasmabrenners mit einer Leistung von 4 kW angeordnet, der druckunabhängig arbeitet und in jeder Betriebssituation ein- und ausgeschaltet werden kann.

## Patentansprüche

1. Verfahren zum Trocknen, Trennen, Klassieren und Zersetzen von Abprodukten, wobei die festen Abprodukte aus einem Ent- und/oder Vergasungsprozeß von Abfallstoffen gemeinsam mit den Abgasen in eine schachtartige gemeinsam Kammer eingebracht und im trichterförmigen unteren Teil dieser schachtartigen Kammer ganz oder teilweise abgelagert werden, und gleichzeitig und/oder anschließend Luft und die Abgase gemeinsam mit den festen Abprodukten aus dem Ent- und%der Vergasungsprozeß getrennt von unten in die Kammer unter Druck eingebracht werden, wobei die Luft im wesentlichen axial und die Abgase gemeinsam mit den festen Abprodukten im wesentlichen tangential in die Kammer eingebracht werden und **dadurch** eine rotationssymmetrische, fontainierende Verwirbelung der festen und gasförmigen Stoffe in der Kammer erfolgt, und anschließend oder während des kontinuierlichen Prozesses die festen getrockneten, getrennten, klassierten und im wesentlichen zersetzten Produkten nach unten und das Gas mit den darin nach befindlichen Feststoffpartikeln nach oben über eine Gas abzugsöffnung aus der Kammer ausgetragen werden.

2. Verfahren nach Anspruch 1, bei der die eingesetzten Abprodukte aus Koks, Asche, Kohlenwasserstoffen, CO₂, CO, H₂, H₂O bestehen

3. Verfahren nach Anspruch 1, bei der die Luft im kegelstumpfförmigen Boden der Kammer axial durch den runden, doppelwandigen Teil des Austragsschachtes eingebracht wird.

4. Verfahren nach Anspruch 1, bei dem die Luft vorgewärmt ist und/oder mit einem Druck von 6 - 8 kPa in die Kammer eingebracht wird.

5. Verfahren nach Anspruch 1, bei dem die Abgase durch Öffnungen im kegelstumpfförmigen Teil der Kammer tangential eingebracht werden, wobei sie im Bereich der Feststoffe mit der eingebrachten Luft zusammentreffen.

6. Verfahren nach Anspruch 1, bei dem die Abgase mit einem Druck vom 6 - 8 kPa in die Kammer eingebracht werden.

7. Verfahren nach Anspruch 1, bei dem die Luft- und Abgasgeschwindigkeit geregelt wird.

8. Verfahren nach Anspruch 1, bei dem im Bereich des kegelstumpfförmigen Bodens der Kammer ein oder zwei ineinander liegende kegelstumpfförmige Einbauten einen oder zwei gegeneinander und gegen den Kammerboden verstellbare Ringspalte bilden, wobei durch einen Ringspalt die Luft axial und durch den anderen Ringspalt die Abgase tangential oder radial eingebracht werden.

9. Verfahren nach Anspruch 1, bei dem die Luft- und/oder Abgasgeschwindigkeiten durch Veränderung der Ringspaltgröße geregelt werden.

10. Verfahren nach Anspruch 1, bei dem ein im zylindrischen Teil angeordneter Stützbrenner im Anfahrzustand die Reaktion einleitet und im Betriebszustand die ständige Aufrechterhaltung der Reaktion sichert.

11. Vorrichtung zur Durchführung des Verfahrens nach einem der Ansprüche 1-10, wobei die Vorrichtung aus einer schachtartigen Reaktionskammer, deren Boden trichterförmig ausgebildet ist und in diesem Boden getrennte Öffnungen für den Eintritt von Luft und von den Abgasen mit den festen Abprodukten eines Ent- und/oder Vergasungsprozesses vorhanden sind, besteht, wobei diese Öffnungen so angeordnet sind, daß die Luft im wesentlichen axial von unten und die Abgase und feststoffe gemeinsan im wesentlichen tangential in den Reaktorraum eintreten, und bei der eine Öffnung im trichterförmigen Boden der Reaktorkammer zur Austragen der getrockneten, getrennten, klassierten und im wesentlichen zersetzten Produkte dient und bei der weiterhin im oberen Teil eine Gasabzugsöffnung vorhanden ist.

12. Vorrichtung nach Anspruch 11, bei dem der trichterförmige unter Teil der Kammer kegelstumpfförmig ausgebildet ist.

13. Vorrichtung nach Anspruch 11, bei der der kegelstumpfförmige Teil der Kammer und der Austragsschacht ganz oder teilweise doppelwandig ausgeführt sind.

14. Vorrichtung nach Anspruch 11, bei der die Öffnungen für die Luft und die Abgase mit den festen Abprodukten im kegelstumpfförmigen Teil so angeordnet sind, daß die Gasströme mindestens teilweise innerhalb der gelagerten Feststoffe zusammentreffen.

15. Vorrichtung nach Anspruch 11, bei dem die Größe der Öffnungen veränderbar ist.

16. Vorrichtung nach Anspruch 11, bei dem die Öffnungen durch einen oder zwei ineinander angeordnete kegelstumpfförmige Einbauten im kegelstumpfförmigen Teil der Kammer in Form von einem oder zwei Ringspalten gebildet werden, wobei durch einen Ringspalt die Luft und durch den anderen Ringspalt die Abgase in die Kammer strömen.

17. Vorrichtung nach Anspruch 11, bei dem die beiden kegelstumpfförmigen Einbauten gegeneinander und gegen die Kammerwandung verschiebbar angeordnet sind.

18. Vorrichtung nach Anspruch 11, bei dem die Öffnung für die Abgase mit den festen Abprodukten ein über 180 ° seitlich angeschnittener Ringspalt ist.

19. Vorrichtung nach Anspruch 11, bei dem der Austragsschacht mehrere Öffnungen aufweist, in die die klassierten Endprodukte getrennt ausgetragen werden können.

20. Vorrichtung nach Anspruch 11, bei dem im zylindrischen Teil der Kammer ein Stützbrenner angeordnet ist.

## Claims

1. Method for drying, separating, classifying and decomposing waste products, the solid waste products from a degassing and/or gasification process of waste materials being introduced together with the exhaust gases into a shaft-like chamber and being in whole or in part deposited in the funnel-shaped lower part of this shaft-like chamber, and at the same time and/or subsequently, air and the exhaust gases together with the solid waste products from the degassing and/or gasification process being introduced separately from below into the chamber under pressure, the air being introduced essentially axially and the exhaust gases together with the solid waste products being introduced essentially tangentially into the chamber and as a result a rotationally symmetric spouting turbulence of the solid and gaseous substances proceeds in the chamber, and subsequently or during the continuous process, the solid dried, separated, classified and essentially decomposed products are discharged downwardly from the chamber and the gas having the solid particles still present therein is discharged upwardly from the chamber via a gas take-off orifice.

2. Method according to Claim 1, in which the waste products used consist of coke, ash, hydrocarbons, CO₂, CO, H₂, H₂O.

3. Method according to Claim 1, in which the air in the truncated-cone-shaped base of the chamber is introduced axially through the round, double-walled part of the discharge shaft.

4. Method according to Claim 1, in which the air is prewarmed and/or is introduced into the chamber at a pressure of 6 - 8 kPa.

5. Method according to Claim 1, in which the exhaust gases are introduced tangentially through orifices in the truncated-cone-shaped part of the chamber, the exhaust gases meeting the introduced air in the region of the solids.

6. Method according to Claim 1, in which the exhaust gases are introduced into the chamber at a pressure of 6 - 8 kPa.

7. Method according to Claim 1, in which the air velocity and exhaust gas velocity are controlled.

8. Method according to Claim 1, in which, in the region of the truncated-cone-shaped bottom of the chamber, one or two truncated-cone-shaped internals lying one inside the other form one or two ring gaps which are adjustable against one another and against the chamber bottom, the air being introduced axially through one ring gap and the exhaust gases being introduced tangentially or radially through the other ring gap.

9. Method according to Claim 1, in which the air velocity and/or exhaust gas velocity are controlled by changing the ring gap size.

10. Method according to Claim 1, in which a supporting burner arranged in the cylindrical part initiates the reaction in the start-up state and ensures constant maintenance of the reaction in the operating state.

11. Apparatus for carrying out the method according to one of Claims 1 - 10, the apparatus consisting of a shaft-like reaction chamber, the bottom of which is formed in a funnel shape, and in this bottom separate orifices are present for the intake of air and of the exhaust gases having the solid waste products of a degassing and/or gasification process, these orifices being arranged in such a way that the air enters essentially axially from the bottom and the exhaust gases and solids enter together essentially tangentially into the reactor space, and in which one orifice in the funnel-shaped bottom of the reactor chamber serves for discharging the dried, separated, classified and essentially decomposed products, and in which, in addition, in the upper part a gas take-off orifice is present.

12. Apparatus according to Claim 11, in which the funnel-shaped lower part of the chamber is formed in a truncated-cone shape.

13. Apparatus according to Claim 11, in which the truncated-cone-shaped part of the chamber and the discharge shaft are in whole or in part of double-walled construction.

14. Apparatus according to Claim 11, in which the orifices for the air and the exhaust gases having the solid waste products are arranged in the truncated-cone-shaped part in such a way that the gas streams meet at least in part within the deposited solids.

15. Apparatus according to Claim 11, in which the size of the orifices is changeable.

16. Apparatus according to Claim 11, in which the orifices are formed by one or two truncated-cone-shaped internals arranged one inside the other in the truncated-cone-shaped part of the chamber in the form of one or two ring gaps, the air flowing into the chamber through one ring gap, and the exhaust gases through the other ring gap

17. Apparatus according to Claim 11, in which the two truncated-cone-shaped internals are arranged so as to be able to slide against one another and against the chamber wall.

18. Apparatus according to Claim 11, in which the orifice for the exhaust gases having the solid waste products is a ring gap cut laterally over 180°.

19. Apparatus according to Claim 11, in which the discharge shaft has a plurality of orifices into which the classified end products can be discharged separately.

20. Apparatus according to Claim 11, in which a support burner is arranged in the cylindrical part of the chamber.

## Revendications

1. Procédé de séchage, de séparation, de classement et de décomposition de déchets, dans lequel les déchets solides sont introduits d'un processus de dégazage et/ou de gazage de résidus conjointement avec les effluents gazeux dans une chambre de type puits et sont déposés complètement ou en partie dans la partie inférieure en forme de trémie de cette chambre de type puits, et simultanément, et/ou ensuite, de l'air et les effluents gazeux conjointement avec les déchets solides sont introduits sous pression depuis le processus de dégazage et/ou de gazage séparément par le dessous dans la chambre, l'air étant introduit essentiellement axialement et les effluents gazeux conjointement avec les déchets solides étant introduits essentiellement tangentiellement dans la chambre, et de ce fait un tourbillonnement à symétrie de révolution, en fontaine, des substances solides et gazeuses étant obtenu dans la chambre, et ensuite, ou pendant le processus continu, les produits solides séchés, séparés, classés et essentiellement décomposés étant évacués vers le bas hors de la chambre et le gaz avec les particules solides s'y trouvant encore étant évacué vers le haut par une ouverture d'extraction de gaz hors de la chambre.

2. Procédé selon la revendication 1, dans lequel les déchets introduits se composent de coke, de cendres, d'hydrocarbures, de CO₂, de CO, de H₂ et de H₂O.

3. Procédé selon la revendication 1, dans lequel l'air est introduit dans le fond de forme tronconique de la chambre, axialement à travers la partie du puits d'évacuation ronde à double paroi.

4. Procédé selon la revendication 1, dans lequel l'air est préchauffé et/ou est introduit dans la chambre à une pression de 6 à 8 kPa.

5. Procédé selon la revendication 1, dans lequel les effluents gazeux sont introduits tangentiellement à travers des ouvertures dans la partie de forme tronconique de la chambre, où ils rencontrent l'air introduit dans la région des matières solides.

6. Procédé selon la revendication 1, dans lequel les effluents gazeux sont introduits dans la chambre à une pression de 6 à 8 kPa.

7. Procédé selon la revendication 1, dans lequel la vitesse de l'air et des effluents gazeux est régulée.

8. Procédé selon la revendication 1, dans lequel, dans la région du fond de forme tronconique de la chambre, un ou deux éléments encastrés de forme tronconique disposés l'un dans l'autre forment une ou deux fentes annulaires réglables l'une par rapport à l'autre et par rapport au fond de la chambre, l'air étant introduit axialement à travers une fente annulaire et les effluents gazeux étant introduits tangentiellement ou radialement à travers l'autre fente annulaire.

9. Procédé selon la revendication 1, dans lequel les vitesses de l'air et/ou des effluents gazeux sont régulées par modification de la taille de la fente annulaire.

10. Procédé selon la revendication 1, dans lequel un brûleur de support disposé dans la partie cylindrique amorce la réaction dans l'état de démarrage et assure le maintien continu de la réaction dans l'état de fonctionnement.

11. Dispositif pour mettre en oeuvre le procédé selon l'une quelconque des revendications 1 à 10, dans lequel le dispositif se compose d'une chambre de réaction de type puits, dont le fond est réalisé en forme de trémie et des ouvertures séparées étant disposées dans ce fond pour l'entrée d'air et des effluents gazeux avec les déchets solides d'un processus de dégazage et/ou de gazage, ces ouvertures étant disposées de telle sorte que l'air entre essentiellement axialement par le dessous et que les effluents gazeux conjointement avec les déchets solides entrent essentiellement tangentiellement dans la chambre du réacteur, et dans lequel une ouverture dans le fond en forme de trémie de la chambre de réacteur sert à l'évacuation des produits séchés, séparés, classés et essentiellement décomposés et dans lequel en outre une ouverture d'extraction de gaz est prévue dans la partie supérieure.

12. Dispositif selon la revendication 11, dans lequel la partie inférieure en forme de trémie de la chambre est réalisée en forme tronconique.

13. Dispositif selon la revendication 11, dans lequel la partie de forme tronconique de la chambre et le puits d'évacuation sont réalisés complètement ou en partie double paroi.

14. Dispositif selon la revendication 11, dans lequel les ouvertures pour l'air et les effluents gazeux conjointement avec les déchets solides sont disposés dans la partie de forme tronconique de telle sorte que les courants gazeux se rencontrent au moins en partie à l'intérieur des matières solides déposées.

15. Dispositif selon la revendication 11, dans lequel la taille des ouvertures est modifiable.

16. Dispositif selon la revendication 11, dans lequel les ouvertures sont formées par un ou deux éléments encastrés de forme tronconique disposés l'un dans l'autre dans la partie de forme tronconique de la chambre, sous la forme d'une ou de deux fentes annulaires, l'air s'écoulant dans la chambre par une fente annulaire et les effluents gazeux par l'autre fente annulaire.

17. Dispositif selon la revendication 11, dans lequel les deux éléments encastrés de forme tronconique sont disposés de manière déplaçable l'un par rapport à l'autre et par rapport à la paroi de la chambre.

18. Dispositif selon la revendication 11, dans lequel l'ouverture pour les effluents gazeux conjointement avec les déchets solides est une fente annulaire coupée latéralement sur 180°.

19. Dispositif selon la revendication 11, dans lequel le puits d'évacuation présente plusieurs ouvertures dans lesquelles les produits finaux classés peuvent être déchargés séparément.

20. Dispositif selon la revendication 11, dans lequel un brûleur de support est disposé dans la partie cylindrique de la chambre.
